# EUROPÄISCHE PATENTSCHRIFT

(11) **EP 0 968 038 B1**
(45) Veröffentlichungstag und Bekanntmachung des Hinweises auf die Patenterteilung: **13.06.2001**
(21) Anmeldenummer: 98914882.0
(22) Anmeldetag: 12.03.1998
(51) Int. Cl.: B01D 15/08, G01N 30/46

(54) **VERFAHREN UND ANLAGE FÜR DIE ADSORPTIVE STOFFTRENNUNG**
METHOD AND INSTALLATION FOR ADSORPTIVE SUBSTANCE SEPARATION
PROCEDE ET INSTALLATION POUR SEPARATION DE MATIERES PAR ADSORPTION

(30) Priorität: 18.03.1997 DE 19711173
(43) Veröffentlichungstag der Anmeldung: 05.01.2000
(73) Patentinhaber: SARTORIUS AG, 37075 Göttingen (DE)
(72) Erfinder: DEMMER, Wolfgang, D-37077 Göttingen (DE); NUSSBAUMER, Dietmar, D-37079 Göttingen (DE); WEISS, Abdul, D-37075 Göttingen (DE)
(86) Internationale Anmeldenummer: EP9801427
(87) Internationale Veröffentlichungsnummer: WO9841302

(56) Entgegenhaltungen:
- US-A- 4 274 967
- US-A- 5 071 547

## Beschreibung

Die Erfindung betrifft ein Verfahren zur Durchführung von adsorptiven Stofftrennungen mittels Permeation von Flüssigkeiten durch poröse Adsorber und eine Anlage zur Durchführung des Verfahrens im Prozeßmaßstab.

Das erfindungsgemäße Verfahren und die erfindungsgemäße Anlage sind anwendbar zur selektiven Abtrennung und Reinigung von Stoffen, wie beispielsweise von biospezifischen Molekülen, Proteinen, Enzymen, ionogenen Stoffen, Metallionen, insbesondere Schwermetallionen aus unterschiedlichen Medien. Die Erfindung ist in erster Linie vorgesehen für entsprechende Arbeiten im Technikum und in der Produktion. Das Verfahren und die Anlage sind anwendbar im Bereich der Biotechnologie, der Gentechnik, der Pharmazie, der Chemie, der Getränke- und Lebensmittelindustrie sowie des Umweltschutzes.

Unter adsorptiver Stofftrennung wird eine spezifische Abtrennung oder Reinigung von Stoffen (Komponenten) aus einer flüssigen Phase (Medium) verstanden, die von einem festen Adsorbens reversibel spezifisch adsorbiert werden. Dazu wird ein Medium, daß die abzutrennenden oder zu reinigenden Stoffe enthält, auf das Adsorbens gegeben oder hindurchgepreßt und mittels einer oder mehrerer Elutionsflüssigkeiten (Eluenten), die unter Druck durch das Adsorbens gepreßt werden, aufgetrennt. In Abhängigkeit vom Ausmaß der Wechselwirkung der Bestandteile des Mediums mit dem Adsorbens und den Elutionsflüssigkeiten werden die einzelnen Komponenten vom Adsorbens unterschiedlich stark festgehalten und treten fraktioniert aus dem Adsorbens aus. Die im Medium enthaltenen zu trennenden Stoffe können entweder alleine oder gemeinsam am Adsorbens adsorbiert werden. Im letzteren Fall wird das Medium mit dem zu trennenden Stoffgemisch zum Beispiel solange durch ein Adsorbermodul filtriert, bis der gewünschte Stoff am Auslaß des Moduls erscheint. Mit geeigneten Elutionsflüssigkeiten, die durch . den Modul zum Beispiel hindurchfiltriert werden, kann er getrennt von anderen am Adsorbens festgehaltenen Stoffen eluiert werden (Stufenelution). Es kann aber auch ein unerwünschter Stoff (Kontaminant) aus dem Medium abgetrennt werden.
Bei der adsorptiven Stofftrennung spielt also die Wechselwirkungen zwischen festen und flüssigen Phasen eine wichtige Rolle, wobei die feste Phase zum Erreichen einer hohen Wirksamkeit eine hohe spezifische Oberfläche aufweisen muß und damit entweder eine geringe Partikelgröße oder eine hohe Porosität haben sollte. Da dem Einsätz extrem feiner Feststoffe in der Praxis Grenzen gesetzt sind, werden im allgemeinen als feste Phasen hochporöse Matrices verwendet. Die Verwendung poröser Matrices hat zur Folge, daß der Kinetik des Elementarvorgangs der Adsorption/Desorption, d.h. der Wechselwirkung zwischen der Komponente der flüssigen Phase mit der festen Phase, die Kinetik überlagert ist, mit der der Stofftransport in die poröse Matrix hinein und aus ihr heraus erfolgt. Da der Stofftransport bei bekannten Matrices überwiegend diffusiv geschieht (wie zum Beispiel bei den partikulären und porösen Matrices), tritt eine für die Effektivität des Verfahrens nachteilige Diffusionslimitierung auf, weil wegen der in flüssigen Phasen generell niedrigen Diffusionskoeffizienten die Kinetik des Gesamtprozesses durch die Kinetik des Stofftransports bestimmt wird. Durchgehende Porenstrukturen aufweisende nichtpartikuläre Matrices, wie poröse Membranen, bieten demgegenüber die Möglichkeit zum überwiegend konvektiven Stofftransport unter der Einwirkung einer Druckdifferenz und damit zu einer wirksamen Ausschaltung der unerwünschten Diffusionslimitierung.
Unter Adsorptionsmembranen sollen Membranen verstanden werden, die an ihrer inneren und äußeren Oberfläche funktionelle Gruppen. Liganden oder Reaktanden tragen, die zur Wechselwirkung mit mindestens einem Stoff einer mit ihr in Kontakt stehenden flüssigen Phase befähigt sind.
Die Bezeichnung Adsorptionsmembran ist als Oberbegriff für verschiedene Arten von Adsorptionsmembranen zu verstehen, wie Kationen-, Anionen-, Liganden-, Affinitäts- oder aktivierten Membranen, die ihrerseits wieder je nach den funktionellen Gruppen, Liganden oder Reaktanden in unterschiedliche Adsorptionsmembran-Typen eingeteilt werden. Poröse Adsorptionsmembranen sind Membranen deren mittlere Porendurchmesser im Mikrofiltrationsbereich liegen und zwischen ungefähr 0,1 µm bis ungefähr 15 µm betragen. Die Dicke der verwendeten porösen Adsorptionsmembranen beträgt zwischen ungefähr 100 µm und ungefähr 500 µm.
Außer den Adsorptionsmembranen sind auch faserige Adsorbentien mit adsorptiven Eigenschaften bekannt (zum Beispiel US-PS 4,986,909), die zu einem flächigen tiefenfilterartigen Bahnmaterial geformt sind. Auf den Fasern dieses Bahnmaterials wurden durch Oberflächenmodifizierung adsorptive Gruppen aufgebracht. In der WO 9103297 Al werden ein technisches Verfahren und eine Vorrichtung zur adsorptiven Stofftrennung beschrieben. Bei dieser Trennung mit einem flächigen Adsorbens, das relativ zu dem zu trennenden Medium transportiert wird, wird das Adsorbens von dem Medium durchströmt. Dabei erfolgt ein konvektiver Transport der zu behandelnden Flüssigkeiten durch das Adsorbens. Das Adsorbens, das vorzugsweise als Band ausgebildet ist, wird mit einer geeigneten Geschwindigkeit transportiert, wobei es nach Durchströmen mit dem zu trennenden Medium entweder zur späteren Weiterbehandlung (Ausspülung, Desorption, Regeneration) aufgerollt oder unmittelbar in weiteren Schritten Behandlungsmedien ausgesetzt werden kann. Nachteilig ist die hohe mechanische Beanspruchung des Adsorbers als bewegtes Endlosbänd.

Die im Prozeßmaßstab erforderlichen Adsorber hoher Bindungskapazität weisen meist nicht den scharfen Durchbruch der Zielsubstanz auf, wie er bei kleinen Einheiten für analytische Trennzwecke erreicht wird, insbesondere dann, wenn zur Installierung der erforderlichen Menge an Adsorbens Adsorbereinheiten in Parallelschaltung betrieben werden. Das hat zur Folge, daß nur ein Teil der theoretischen Bindungskapazität genutzt werden kann. Unter Zielsubstanz wird hier diejenige Komponente des Mediums verstanden, die an dem Adsorbens reversibel gebunden wird. Dabei kann es sich sowohl um die nutzbare Komponente (Produkt) als auch eine störende Komponente (Kontaminant) handeln.
Neben der Notwendigkeit einer Überdimensionierung des Adsorbers ist eine weitere nachteilige Folge davon, daß der Adsorber zum Zeitpunkt der Elution nicht voll beladen ist und somit die erreichbare Konzentration an Zielsubstanz im Eluat kleiner, als theoretisch möglich ist. Diese Nachteile großer Adsorbereinheiten können zwar durch Serienschaltung von mindestens zwei Einheiten begrenzt werden, eine starre Serienschaltung von Adsorbereinheiten bewirkt jedoch in der ersten Phase der Beladung, also vor dem Durchbruch der Zielsubstanz aus der ersten Stufe, keine Vorteile, weil die zweite Stufe nur von dem zielsubstanzfreien Permeat der ersten Stufe durchströmt wird. Sie trägt somit nur zum Druckabfall der Gesamtanlage bei, ohne in irgendeiner Weise genutzt zu werden.

Der Erfindung liegt daher die Aufgabe zugrunde, ein verbessertes Verfahren und eine Anlage zu schaffen, die für eine adsorptive Stofftrennung im Prozeßmaßstab geeignet ist, um aus einem flüssigen Medium pro Zeiteinheit eine bestimmte Menge einer Zielsubstanz zu isolieren.

Erfindungsgemäß wird anstelle eines Verfahrens mit Adsorbermodulen in einer starren Serienschaltung ein als Tandemverfahren bezeichnetes Verfahren angewandt. Es beruht auf der Tatsache, daß der Durchbruch der Zielsubstanz bei einem Adsorber erst in der letzten Phase der Beladung mit den adsorbierbaren Stoffen eintritt und die Serienschaltung daher erst in dieser Phase Vorteile bringt. Es werden deshalb Adsorbermodule in zwei identischen Stufen A und B eingesetzt und mindestens zwei Pumpen, wobei zyklisch entweder jeweils gerade eine Stufe beladen und die andere eluiert bzw. regeneriert wird, oder beide in Serie betrieben werden.

Der Ablauf ist dabei im einzelnen folgender. Die Stufe A wird beladen. Bevor die Zielsubstanz im Permeat durchbricht, wird das Permeat auf die frisch regenerierte Stufe B umgeschaltet. Sobald Stufe A vollständig beladen ist, wird restliches Medium mit Puffer aus Stufe A in Stufe B gespült und die so vorbeladene Stufe B direkt mit Medium beaufschlagt, während Stufe A eluiert wird, womit der beschriebene Anfangszustand mit vertauschten Stufen wieder erreicht ist. Bei Steuerung durch einen Prozeßrechner lassen sich auf diese Weise, insbesondere unter Verwendung von Membranadsorbern, sehr kurze Zykluszeiten und damit sehr hohe Anlagenproduktivitäten erreichen.

Eine Anlage zur Durchführung eines derartigen Tandemverfahrens setzt den Einsatz einer Vielzahl von Absperr- und Umschaltarmaturen voraus, wobei deren Bauart einen erheblichen Einfluß auf die Effektivität des Gesamtprozesses hat. Besonders nachteilig kann sich das Vorhandensein von toten (also nicht durchspülten) Leitungsteilen auswirken. Erfolgt beispielsweise die Umschaltung von einem Medium auf das andere, ist das zwar prinzipiell unter Verwendung eines T-Stücks mit zwei getrennten Absperrorganen möglich, doch verbleibt stets ein nicht durchspültes Leitungsteil, aus dem heraus das nachfolgende Medium durch das vorhergehende kontaminiert wird. Die Marc Valve Corporation (Tewksbury, Massachusetts) hat ein System von Membranventilen auf den Markt gebracht, die in einer einzelnen Baueinheit eine Vielzahl von Funktionen vereinigen (bis zu 6 Zugänge mit einem Abgang, by pass - Ventile und Ventile zur Strömungsumkehr) und die ein vernachlässigbares Totvolumen aufweisen. Diese oder gleichwertige Armaturen werden bevorzugt eingesetzt.

Die Erfindung wird nachstehend anhand der Figuren 1 bis 6 näher erläutert.
Dabei zeigen:
- Fig. 1: die schematischen Darstellungen eines Fließschemas einer erfindungsgemäßen Tandemanlage im Betriebszustand, in dem Stufe A mit Medium beaufschlagt wird, während aus Stufe B das Produkt eluiert wird,
- Fig. 2: die erfindungsgemäße Tandemanlage gemäß Fig. 1 im Betriebszustand der Beaufschlagung der Stufen A und B mit Medium in Serienschaltung,
- Fig. 3: die erfindungsgemäße Tandemanlage gemäß Fig. 1 im Betriebszustand während der Beaufschlagung der Stufe A mit Medium und der Regeneration der Stufe B im geschlossenen Kreislauf und mit Rückspülung,
- Fig. 4: die erfindungsgemäße Tandemanlage gemäß Fig. 1 während der Elution eines Kontaminanten mit Eluent 1,
- Fig. 5: die erfindungsgemäße Tandemanlage gemäß Fig. 1 während der Gewinnung eines Produktes, das zuvor mit einem Eluenten im Kreislauf eluiert wurde durch Spülen der Kreislaufleitung mit Puffer und
- Fig. 6: eine erfindungsgemäße Tandemanlage mit einer Einzelstufe.

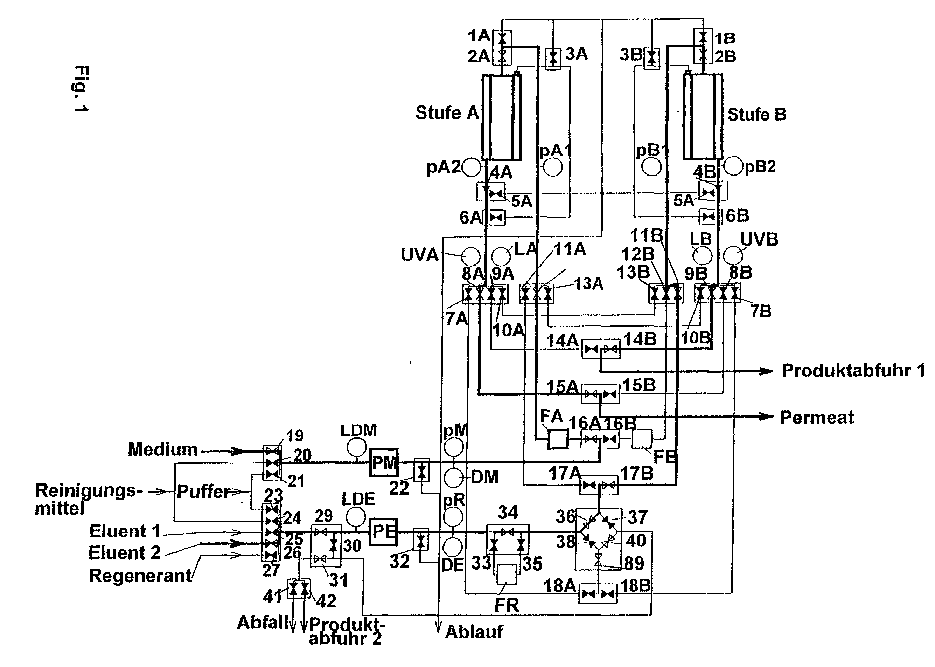

Die Figuren 1 bis 5 zeigen eine Tandemanlage, die über die Stufen A und B verfügen, welche identische Adsorbereinheiten sind, die entweder aus einem Einzelmodul oder aus parallel und oder in Serie geschalteten Einzelmodulen bzw. Säulen bestehen. Mit pAl, pA2, pB1, pB2, pM, pR, sind Druckmeßorgane, mit UVA, UVB sind Monitore zur Bestimmung der UV-Extinktion, mit LA, LB sind Leitfähigkeitsmonitore, mit LDM und LDE Luftdetektoren (Trockenlaufschutz für die Pumpen), mit PM, PE Pumpen und mit FA, FB und FR sind Vorfiltereinheiten bezeichnet. Die Ziffern 1-42 bezeichnen die einzelnen auf-zu Funktionen der Ventile, wobei Ventilfunktionen mit identischen Aufgaben in den beiden Stufen gleiche Nummern haben und durch den Zusatz A bzw. B unterschieden werden. Bei den Ventilen mit den Ventilfunktionen 29-31 und 33-35 handelt es sich um by pass - Ventile, die Ventilfunktionen 4A und 4B dienen als Rückstauventile, die Ventilfunktionen 5A, 5B, 22 und 32 dienen zur Entleerung der Rohrleitungen, die Ventilfunktionen 1A, 1B, 3A und 3B der Entlüftung, 6A und 6B zur Öffnung eines by pass von der Entlüftungseinheit der Module. Das Ventil mit den Funktionen 36-40 dient der Richtungsumkehr. In den Figuren bedeuten fett ausgefüllte Ventilsymbole, daß das Ventil gesperrt ist, offene, nicht fett gedruckte Ventilsymbole bedeuten, daß das Ventil geöffnet ist. Stärker hervorgehobene Linien bedeuten, daß Flüssigkeiten durch diese Leitungen gefördert werden.

Figur 1 stellt den Betriebszustand der Anlage dar, in dem Stufe A mit Medium beaufschlagt wird, während aus Stufe B das Produkt eluiert wird.

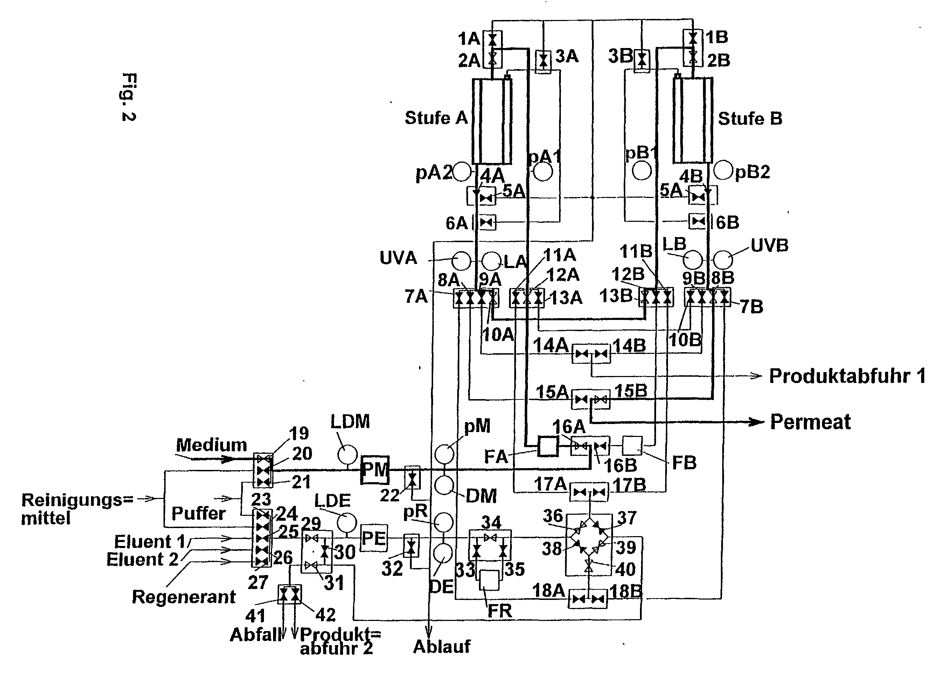

Figur 2 stellt die Beaufschlagung der Stufen A und B mit Medium in Serienschaltung dar. Diese Schritte sind essentiell für das Tandemprinzip.

Es handelt sich dabei um eine Ausführungsform für die Zweistufenelution, bei der nach der Beladung zuerst mit Eluent 1 ein gebundener Kontaminant eluiert wird und dann mit Eluent 2 das Produkt.

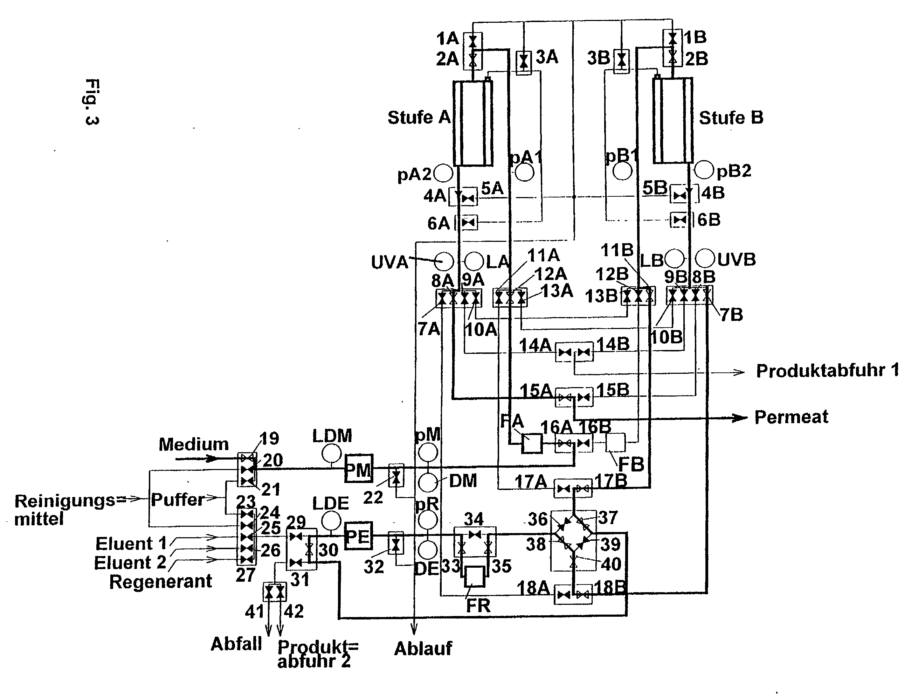

In den folgenden Fließdiagrammen der Figuren 3 bis 6 sind weiter Ausgestaltungen der Erfindung graphisch verdeutlicht, die einen Eindruck von der mit der vorgesehenen Ventilbestückung erreichbaren, den verschiedensten Anforderungen gerecht werdenden Variabilität vermitteln. Der Fachmann ist inb der Lage zu ermessen, welche der Armaturen bei einfacher gelagerten Anwendungsfällen entbehrlich sind.

Während gemäß Figur 3 die Stufe A mit Medium beaufschlagt wird, erfolgt bei der Stufe B die Regeneration im geschlossenen Kreislauf und mit Rückspülung. Dabei ist das Regenerantfilter, dessen by pass bei sämtlichen anderen Flüssigkeiten geschlossen ist, in den Kreislauf geschaltet, sodaß sich partikuläre Verunreinigungen, die sich vom Adsorber ablösen können, nicht wieder ablagern können.

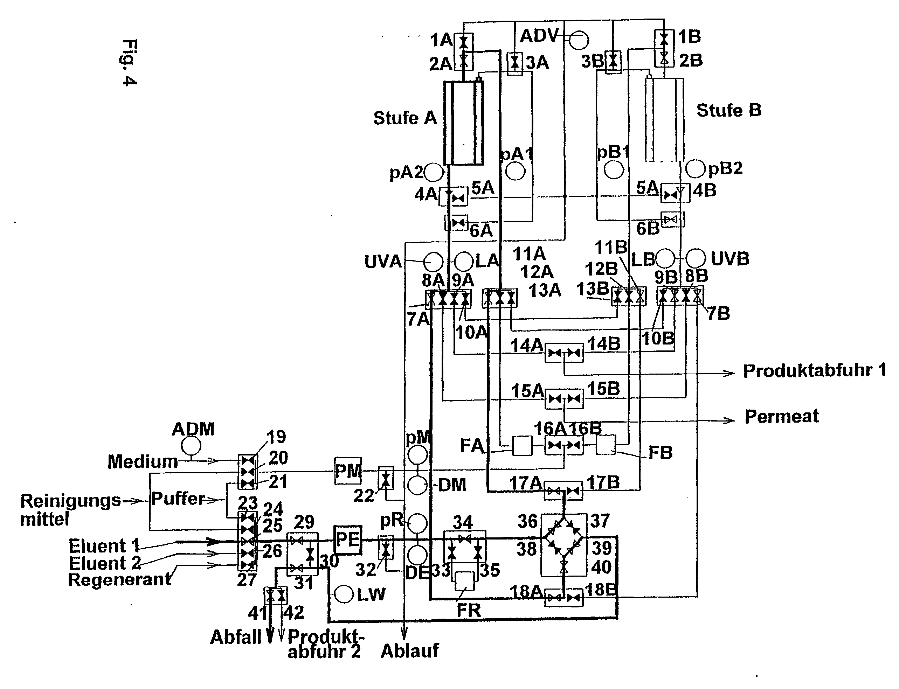

In der Figur 4 ist die Schaltung der Tandemanlage gezeigt, bei der die Elution eines Kontaminanten von der Stufe A mit Eluent 1 erfolgt.

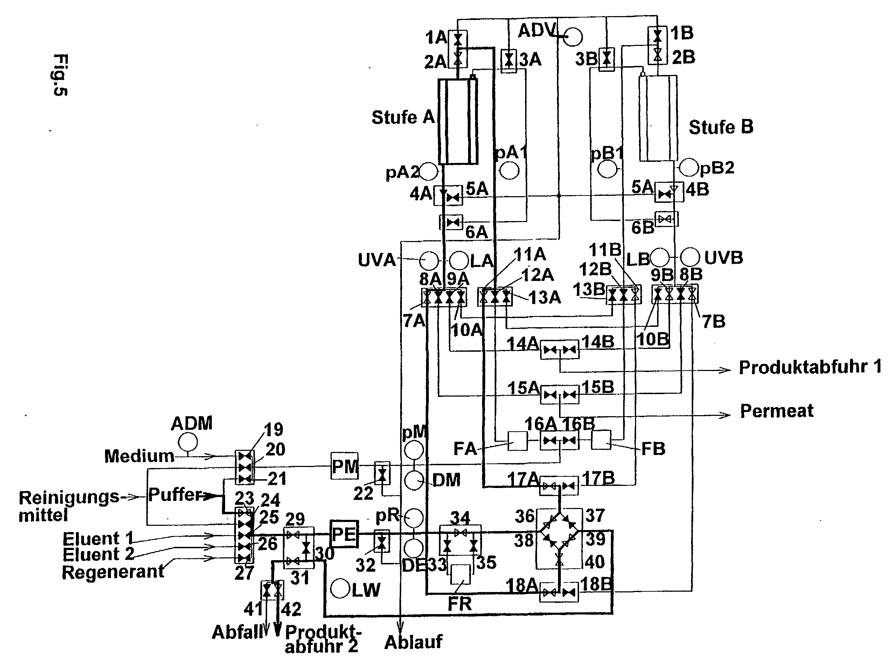

In der Figur 5 ist der Zustand der Tandemanlage dargestelt, bei der die Gewinnung eines Produktes aus der Stufe A erfolgt, das zuvor mit einem Eluenten im Kreislauf eluiert wurde durch Spülen der Kreislaufleitung mit Puffer.

Erfindungsgemäß ist es auch möglich, die Vorzüge des Tandem-Prinzips bei Vorhandensein nur einer Adsorberstufe zu nutzen. Dazu wird vor dem Durchbruch der Zielsubstanz auf einen Zwischentank umgeschaltet, und die Stufe nach Elution mit dem im Zwischentank gesammelten Permeat mittels der Pumpe PE beaufschlagt.

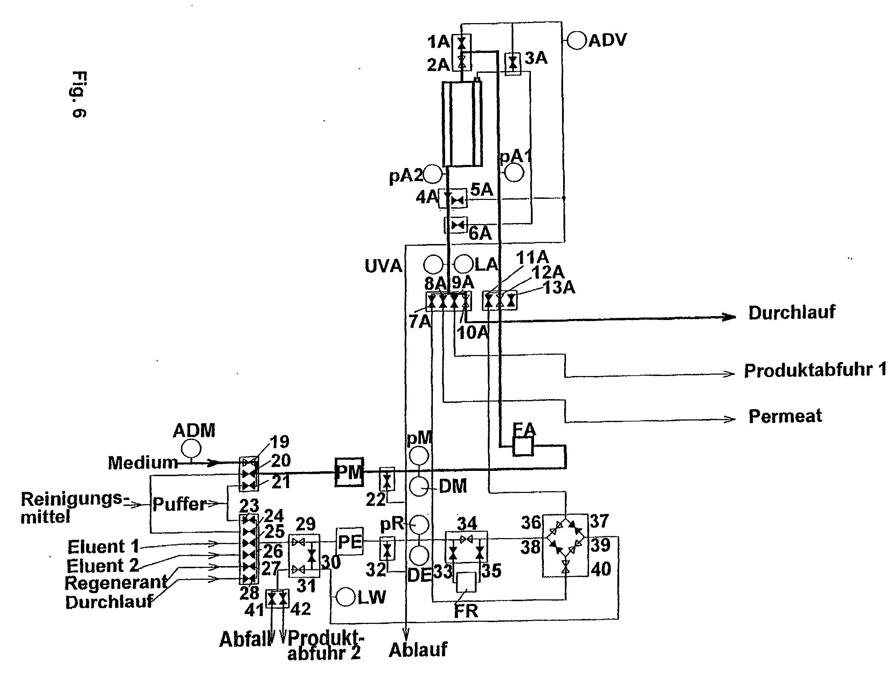

Die Figur 6 zeigt die Anwendung dieses Tandem-Prinzips auf eine Einzelstufe, wobei mit "Durchlauf" das im Zwischentank gesammelte Permeat bezeichnet wird.

## Patentansprüche

1. Verfahren zur Durchführung von adsorptiven Stofftrennungen mittels Permeation von Flüssigkeiten durch poröse Adsorber,
dadurch gekennzeichnet, daß
zwei identische Adsorberstufen A und B mit mindestens zwei Pumpen verwendet und folgende wiederkehrende Zyklen durchgeführt werden, die aus den Schritten bestehen:
a) Beladen der ersten Adsorberstufe A mit dem zu trennenden Stoffgemisch, in dem das das Stoffgemisch enthaltende Medium durch diese erste Adsorberstufe A geströmt wird,
b) Umleiten des Permeats von der ersten Adsorberstufe A vor Durchbruch der Zielsubstanz im Permeat auf die zweite, frisch regenerierte Adsorberstufe B,
c) Freispülen der ersten Adsorberstufe A nach vollständiger Beladung vom Medium mit einer Pufferlösung bei Einleitung der Pufferlösung in die zweite Adsorberstufe B,
d) Beladen der zweiten bereits vorbeladenen Adsorberstufe B mit Medium, während durch die erste Adsorberstufe A Elutionsflüssigkeit zur Gewinnung der Zielsubstanz hindurchgeströmt wird und
e) Wiederholen der Schritte a) bis d), in welchen B die erste Adsorberstufe und A die zweite Adsorberstufe darstellt.

2. Verfahren zur Durchführung von adsorptiven Stofftrennungen mittels Permeation von Flüssigkeiten durch poröse Adsorber,
dadurch gekennzeichnet, daß
eine Adsorberstufen A und ein Zwischentank mit mindestens zwei Pumpen verwendet und folgende wiederkehrende Zyklen durchgeführt werden, die aus den Schritten bestehen:
a) Beladen der Adsorberstufe A mit dem zu trennenden Stoffgemisch, in dem das das Stoffgemisch enthaltende Medium durch diese Adsorberstufe A geströmt wird,
b) Umleiten des Permeats von der ersten Adsorberstufe A vor Durchbruch der Zielsubstanz im Permeat in den Zwischentank,
c) Freispülen der Adsorberstufe A nach vollständiger Beladung vom Medium mit einer Pufferlösung bei Einleitung der Pufferlösung in den Zwischentank,
d) Hindurchströmen von Elutionsflüssigkeit durch die Adsorberstufe A zur Gewinnung der Zielsubstanz,
e) Beladen der Adsorberstufe A mit den im Zwischentank gesammelten Flüssigkeiten und anschließend mit Medium.

3. Verfahren nach den Ansprüchen 1 und 2,
dadurch gekennzeichnet, daß
die Gesamtanlage, einschließlich der Schritte der wiederkehrenden Zyklen prozeßrechnergesteuert werden.

4. Anlage zur Durchführung von adsorptiven Stofftrennungen mittels Permeation von Flüssigkeiten durch poröse Adsorber,
dadurch gekennzeichnet, daß
die Anlage aus zwei identischen Adsorberstufen A und B und mindestens zwei Pumpen besteht, die mit Ventilfunktionen, Pumpen und Meßorganen über Leitungen verbunden sind, mit welcher folgende wiederkehrende Zyklen durchgeführt werden, die aus den Schritten bestehen:
a) Beladen der ersten Adsorberstufe A mit dem zu trennenden Stoffgemisch, in dem das das Stoffgemisch enthaltende Medium durch diese erste Adsorberstufe A geströmt wird,
b) Umleiten des Permeats von der ersten Adsorberstufe A vor Durchbruch der Zielsubstanz im Permeat auf die zweite, frisch regenerierte Adsorberstufe B,
c) Freispülen der ersten Adsorberstufe A nach vollständiger Beladung vom Medium mit einer Pufferlösung und Einleiten dieser Pufferlösung in die zweite Adsorberstufe B,
d) Beladen der zweiten bereits vorbeladenen Adsorberstufe B mit Medium, während durch die erste Adsorberstufe A Elutionsflüssigkeit zur Gewinnung der Zielsubstanz hindurchgeströmt wird und
e) Wiederholen der Schritte a) bis d), in welchen B die erste Adsorberstufe und A die zweite Adsorberstufe darstellt.

5. Anlage zur Durchführung von adsorptiven Stofftrennungen mittels Permeation von Flüssigkeiten durch poröse Adsorber,
dadurch gekennzeichnet, daß
die Anlage aus einer Adsorberstufe A und einem Zwischentank und mindestens zwei Pumpen besteht, die mit Ventilfunktionen, Pumpen und Meßorganen über Leitungen verbunden sind, mit welcher folgende wiederkehrende Zyklen durchgeführt werden, die aus den Schritten bestehen:
a) Beladen der Adsorberstufe A mit dem zu trennenden Stoffgemisch, in dem das das Stoffgemisch enthaltende Medium durch diese Adsorberstufe A geströmt wird,
b) Umleiten des Permeats von der ersten Adsorberstufe A vor Durchbruch der Zielsubstanz im Permeat in den Zwischentank,
c) Freispülen der Adsorberstufe A nach vollständiger Beladung vom Medium mit einer Pufferlösung bei Einleitung der Pufferlösung in den Zwischentank,
d) Hindurchströmen von Elutionsflüssigkeit durch die Adsorberstufe A zur Gewinnung der Zielsubstanz,
e) Beladen der Adsorberstufe A mit den im Zwischentank gesammelten Flüssigkeiten und anschließend mit Medium.

6. Anlage nach den Ansprüchen 4 und 5,
dadurch gekennzeichnet, daß
die Adsorberstufen aus einem Einzeladsorbermodul oder parallel und/oder in Serie geschalteten Einzeladsorbermodulen oder Adsorbermodulsäulen bestehen.

7. Anlage nach den Ansprüchen 4 bis 6,
dadurch gekennzeichnet, daß
die Adsorberstufen, der Zwischentank, die Ventilfunktionen, Pumpen und Meßorgane mit einem Prozeßrechner gekoppelt sind, derart, daß die Schritte a) bis e) automatisch durchgeführt werden.

## Claims

1. Method of carrying out adsorptive substance separations by means of permeation of liquids through porous absorbers, characterised in that two identical adsorber stages A and B with at least two pumps are used and the following recurrent cycles are carried out, which cycles consist of the steps:
a) charging the first adsorber stage A with the substance mixture to be separated, in which the medium containing the substance mixture is conducted through this first adsorber stage A,
b) redirection of the permeate from the first adsorber stage A before break-through of the desired substance into the permeate to the second, freshly regenerated adsorber stage B,
c) washing free of the first adsorber stage A after complete charging of the medium by a buffer solution on introduction of the buffer solution into the second adsorber stage B,
d) charging of the second, already precharged adsorber stage B with medium, whilst elution liquid for recovering the desired substance is conducted through the first adsorber stage A and
e) repeating the steps a) to d), in which B represents the first adsorber stage and A the second adsorber stage.

2. Method of carrying out adsorptive substance separations by means of permeation of liquids through porous absorbers, characterised in that an adsorber stage A and an intermediate tank with at least two pumps are used and the following recurrent cycles are carried out, which cycles consist of the steps:
a) charging the adsorber stage A with the substance mixture to be separated, in which the medium containing the substance mixture is conducted through this adsorber stage A,
b) redirection of the permeate from the first adsorber stage A before break-through of the desired substance into the permeate to the intermediate tank,
c) washing free of the adsorber stage A after complete charging of the medium by a buffer solution on introduction of the buffer solution into the intermediate tank,
d) conducting elution liquid through the adsorber stage A for recovery of the desired substance and
e) charging the adsorber stage A with the liquids collected in the intermediate tank and subsequently with medium.

3. Method according to claims 1 and 2, characterised in that the entire plant inclusive of the steps of the recurrent cycles is controlled by a process computer.

4. Plant for carrying out adsorptive substance separations by means of permeation of liquids through porous adsorbers, characterised in that the plant consists of two identical adsorber stages A and B and at least two pumps, which are connected by way of ducts with valve functions, pumps and measuring elements, by which the following recurrent cycles are carried out, which cycles consist of the steps:
a) charging the first adsorber stage A with the substance mixture to be separated, in which the medium containing the substance mixture is conducted through this first adsorber stage A,
b) redirection of the permeate from the first adsorber stage A before break-through of the desired substance into the permeate to the second, freshly regenerated adsorber stage B,
c) washing free of the first adsorber stage A after complete charging of the medium by a buffer solution and introduction of this buffer solution into the second adsorber stage B,
d) charging of the second, already precharged adsorber stage B with medium, whilst elution liquid for recovery of the desired substance is conducted through the first adsorber stage A and
e) repeating the steps a) to d), in which B represents the first adsorber stage and A the second adsorber stage.

5. Plant for carrying out adsorptive substance separations by means of permeation of liquids through porous adsorbers, characterised in that the plant consists of an adsorber stage A and an intermediate tank and at least two pumps, which are connected by way of ducts with valve functions, pumps and measuring elements, by which the following recurrent cycles are carried out, which cycles consist of the steps:
a) charging the adsorber stage A with the substance mixture to be separated, in which the medium containing the substance mixture is conducted through this adsorber stage A,
b) redirection of the permeate from the first adsorber stage A before break-through of the desired substance into the permeate to the intermediate tank,
c) washing free of the adsorber stage A after complete charging of the medium by a buffer solution on introduction of the buffer solution into the intermediate tank,
d) conducting elution liquid through the adsorber stage A for recovery of the desired substance and
e) charging the adsorber stage A with the liquids collected in the intermediate tank and subsequently with medium.

6. Plant according to claims 4 and 5, characterised in that the adsorber stages consist of an individual adsorber module or individual adsorber modules of adsorber module columns connected in parallel and/or in series.

7. Plant according to claims 4 to 6, characterised in that the adsorber stages, the intermediate tank, the valve functions, pumps and measuring elements are coupled with a process computer in such a manner that the steps a) to e) are performed automatically.

## Revendications

1. Procédé pour effectuer des séparations de substances par adsorption au moyen de la perméation de liquides à travers des adsorbants poreux, caractérisé en ce qu'on utilise deux niveaux d'adsorbants identiques A et B avec au moins deux pompes et on effectue les cycles répétitifs suivants qui comprennent les étapes consistant à :
a) charger le premier niveau d'adsorbant A avec le mélange de substances à séparer en faisant couler le milieu contenant le mélange de substances à travers ce premier niveau d'adsorbant A,
b) dévier le perméat du premier niveau d'adsorbant A, avant l'apparition de la substance cible dans le perméat, vers le second niveau d'adsorbant B fraîchement régénéré,
c) rincer le premier niveau d'adsorbant A, après le chargement complet du milieu, avec une solution tampon avec introduction de la solution tampon dans le second niveau d'adsorbant B,
d) charger le second niveau d'adsorbant B, déjà préalablement chargé, avec le milieu pendant que le premier niveau d'adsorbant A est traversé par un liquide d'élution pour l'obtention de la substance cible, et
e) recommencer les étapes a) à d) dans lesquelles B représente le premier niveau d'adsorbant et A représente le second niveau d'adsorbant.

2. Procédé pour effectuer des séparations de substances par adsorption au moyen de la perméation de liquides à travers des adsorbants poreux, caractérisé en ce qu'on utilise un niveau d'adsorbant A et une cuve intermédiaire avec au moins deux pompes et on effectue les cycles répétitifs suivants qui comprennent les étapes consistant à :
a) charger le niveau d'adsorbant A avec le mélange de substances à séparer en faisant couler le milieu contenant le mélange de substances à travers ce niveau d'adsorbant A,
b) dévier le perméat du premier niveau d'adsorbant A, avant l'apparition de la substance cible dans le perméat, vers la cuve intermédiaire,
c) rincer le niveau d'adsorbant A, après le chargement complet du milieu, avec une solution tampon avec introduction de la solution tampon dans la cuve intermédiaire,
d) faire couler un liquide d'élution à travers le niveau d'adsorbant A pour obtenir la substance cible,
e) charger le niveau d'adsorbant A avec les liquides accumulés dans la cuve intermédiaire et ensuite avec le milieu.

3. Procédé selon les revendications 1 et 2, caractérisé en ce que l'ensemble de l'installation, y compris les étapes des cycles répétitifs, est commandé par un ordinateur de contrôle de processus.

4. Installation pour effectuer des séparations de substances par adsorption au moyen de la perméation de liquides à travers des adsorbants poreux, caractérisée en ce que l'installation comprend deux niveaux d'adsorbants identiques A et B avec au moins deux pompes, qui sont reliés à des fonctions de vannes, des pompes et des organes de mesure au moyen de conduites, au moyen de laquelle on effectue les cycles répétitifs suivants qui comprennent les étapes consistant à :
a) charger le premier niveau d'adsorbant A avec le mélange de substances à séparer en faisant couler le milieu contenant le mélange de substances à travers ce premier niveau d'adsorbant A,
b) dévier le perméat du premier niveau d'adsorbant A, avant l'apparition de la substance cible dans le perméat, vers le second niveau d'adsorbant B fraîchement régénéré,
c) rincer le premier niveau d'adsorbant A, après le chargement complet du milieu, avec une solution tampon avec introduction de cette solution tampon dans le second niveau d'adsorbant B,
d) charger le second niveau d'adsorbant B, déjà préalablement chargé, avec le milieu pendant que le premier niveau d'adsorbant A est traversé par un liquide d'élution pour l'obtention de la substance cible, et
e) recommencer les étapes a) à d) dans lesquelles B représente le premier niveau d'adsorbant et A représente le second niveau d'adsorbant.

5. Installation pour effectuer des séparations de substances par adsorption au moyen de la perméation de liquides à travers des adsorbants poreux, caractérisée en ce que l'installation comprend un niveau d'adsorbant A et une cuve intermédiaire et au moins deux pompes, qui sont reliés à des fonctions de vannes, des pompes et des organes de mesure au moyen de conduites, au moyen de laquelle on effectue les cycles répétitifs suivants qui comprennent les étapes consistant à :
a) charger le niveau d'adsorbant A avec le mélange de substances à séparer en faisant couler le milieu contenant le mélange de substances à travers ce niveau d'adsorbant A,
b) · dévier le perméat du premier niveau d'adsorbant A, avant l'apparition de la substance cible dans le perméat, vers la cuve intermédiaire,
c) rincer le niveau d'adsorbant A, après le chargement complet du milieu, avec une solution tampon avec introduction de la solution tampon dans la cuve intermédiaire,
d) faire couler un liquide d'élution à travers le niveau d'adsorbant A pour obtenir la substance cible,
e) charger le niveau d'adsorbant A avec les liquides accumulés dans la cuve intermédiaire et ensuite avec le milieu.

6. Installation selon les revendications 4 et 5, caractérisée en ce que les niveaux d'adsorbants sont formés d'un module unique d'adsorbant ou de modules individuels d'adsorbant ou de colonnes de modules d'adsorbant disposés parallèlement et/ou montés en série.

7. Installation selon les revendications 4 à 6, caractérisée en ce que les niveaux d'adsorbants, la cuve intermédiaire, les fonctions de vannes, les pompes et les organes de mesure sont reliés à un ordinateur de contrôle de processus de façon telle que les étapes a) à e) sont effectuées automatiquement.
